# EUROPEAN PATENT APPLICATION

(11) **EP 4 793 559 A1**
(43) Date of publication of application: **19.08.2026**
(21) Application number: 24809712.3
(22) Date of filing: 08.10.2024
(51) Int. Cl.: F24D 3/00, F24D 3/02, F24S 20/60, F24S 20/66, F24D 3/18, F24F 5/00

(54) **SYSTEM FOR ENERGY COLLECTION AND STORAGE AND FOR HEATING BUILDINGS**

(30) Priority: 12.10.2023 PT 2023118979; 12.12.2023 PT 2023119121
(71) Applicant: Endless Ingredients Unipessoal LDA, Porto 4000-042 (PT)
(72) Inventor: PEREIRA MOURA, João, 4420-128 Gondomar (Porto) (PT)
(74) Representative: Patentree
(86) International application number: PCT/IB2024/059831
(87) International publication number: WO 2025/078944

(57) **Abstract**

The present description refers to a system for energy collection and storage and building heating.

In the text, a system for energy collection and storage and building heating is described that comprises at least one heat-receiving outer layer of the building that comprises a hollow layer, at least one heat exchanger that receives the air from the outer layer of the building, piping for heat exchange with the soil, side walls surrounding said soil volume; and at least one controller associated with at least one temperature sensor configured for actuating the system.

## Description

### TECHNICAL FIELD

The present specification refers to a system for energy collection and storage and building heating.

### BACKGROUND

In a context of energetic crisis, consumption reduction is of great importance.

One of the options that begins to gain increasing expression is the use of energy for building heating, which energy can be derived from natural sources, such as solar energy, for example.

Due to the need for acquiring electrical power in a cleaner fashion and in increasing amounts, modes of benefiting from such energy were developed for electricity generation or even for its use in a direct manner.

Document CN206545262U describes a new building, which includes a combination between the application of a heat case on the soil layer of room body bottom, allowing the accumulated heat case to provide energy through a U-shaped pipe.

Document CN207162702U describes an earth source heat pump exchanger system combined with the house pile foundation, including a ground source heat pump assembly and ground source heat exchange assemblies, ground source heat pump assembly with hot water outlet pipe and cold water inlet pipe. The system presented allows to reduce the financial effort of digging a new well for piping placement, allowing its combination with the building's foundations. However, in this system the house pillars are used as the "outer" permutation, being one of the sources of energy that is then introduced into the house as hot water.

In addition to these technical solutions, the current market's fastest-growing solution is the one defined by the Passive House concept, which entails high insulation of the house and a high level of air tightness. Passive House concept is a constructive concept that defines a standard of high performance, efficient under the energetic point of view, healthy, comfortable, economically accessible and sustainable. The extraction air passes through a heat exchanger, allowing to recover energy in the induction air. Such a system allows large energetic gains when compared to the traditional construction, but implies the installation of air ducts, large and costly, as well as the installation of a heat exchanger with energy recovery, which is also somehow costly and requires maintenance. The standard does not define the heat source, which, even though being reduced, is usually necessary in colder climates where an air-water heat pump may not be efficient or even functional.

Another solution proposes the existence of a thermal accumulation layer under the building, which layer would be heated by heated air with a solar system, through one or more ventilators. Such a system is limited to the air temperature during sunshine hours, a limitation that can compromise the building's comfort for not attaining a sufficient accumulation. It also implies the installation of air piping, which occupies space and is costly when compared to liquid piping, implying in some cases that the accumulation layer is done with rockfill for the air to pass, which sometimes means that the materials available on the site cannot be used. An example of this technical solution is presented in document DE3740618C2 that describes a system that creates a greenhouse for heat collection, which is used in an air-air heat pump, accumulating energy under the building through ventilation pipes.

Another known embodiment with hot air use by an air/water heat pump with storage under the ground concerns greenhouses, but in this case the storage is not insulated. This system is not adaptable to habitable buildings, since the entire inner space is in contact with the hot air, greenhouse area, in addition to the fact that the storage is not insulated, which implies dissipation of energy to the system exterior and a consequent loss of efficiency. An example of this technical solution is presented in document CN108731305A.

These facts are described in order to illustrate the technical problem solved by the embodiments of the present document.

### GENERAL DESCRIPTION

The present description refers to a system for energy collection and storage and building heating.

It is a purpose of the now-described embodiments to obtain a technical solution with low technological complexity, maintaining good efficiency, thus allowing a significant reduction in the environmental impact and energy consumption of buildings. The technical solutions presented in the prior art do not show the same correlation between technological simplicity and efficiency, resulting in more expensive, sometimes less efficient systems, or that do not cover so many points of the use of a building. For example, the Passive House concept, known in the prior art, does not incorporate a technical solution such as the one now proposed for the sanitary hot water (SHW).

The proposed solution thus involves a system for energy collection and storage and building heating with solar energy use and thermal storage of that same energy. The solar energy use can be carried out through the outer layer of the building, that can be constructed with a material which, by its characteristics, allows light to pass, such as for example glass, polycarbonate or solar panels, and the heat absorption and irradiation such as, for example, a steel sheet, for a hollow layer (HL), that can be placed, for example, under the outer layer and before the insulation coating. This hollow layer allows the air to pass through by convection up to the top of the building, air which is heated by the sun and which also recovers heat that is dissipated from the interior of the building. In an embodiment, at the top of the building, the air provides a heat recovery device such as, for example, a gas/fluid heat exchanger or an air/liquid heat pump. In an embodiment, the gas can be air and the fluid water.

The system can also take advantage of the exhaust gases, as well as the sewer ventilation.

In addition to this advantage, the system also allows the heating of sanitary hot water (SHW) with a significant coefficient of performance gain (COP), something that the prior art examples do not allow.

The system now disclosed allows an energetic gain in heating, when compared to an equal level of insulation and tightness, resulting in a better energetic behaviour, especially if the heating of SHW is included in the equation. In addition to this greater efficiency, the solution now proposed, when compared to systems of the prior art such as, for example, the Passive House system, saves economic costs on the installation of ventilation piping and the installation of the heat recovery device. Comparatively, there is a gain in the useful space of the building since these facilities occupy large spaces, usually forcing the existence of spacious false ceilings. In a specific embodiment and without limiting the scope, the temperature differential between the heated air supplied to the exchanger and the ambient air at 15°C can result in an energetic gain of 0.7 coefficient of performance (COP) points for heating the water at 40°C and 1.3 COP points for heating the water at 25°C. Throughout the present description, the coefficient of performance is considered to be an indicator used to demonstrate the energetic efficiency of a heat recovery device, a cooler or an air conditioning system. In that sense, to determine the COP it is necessary to find the ratio between the energy contained in the heat carried by a system (Q) and the work performed by the system for this to happen (W).

The present technology further comprises the introduction of at least one drain for draining moisture, thus avoiding the existence of ascending moisture that makes the environment uncomfortable within the building.

Throughout the present application, ascending moisture is considered to be a term commonly used in civil engineering to indicate the moisture resulting from capillary infiltration of the water present in the soil along floors and walls.

The present application describes a system for energy collection and storage and building heating comprising at least one heat-receiving outer layer of the building that comprises a hollow layer; at least one heat exchanger that receives the air from the outer layer of the building; piping for heat exchange with the soil; side walls thermally insulated surrounding said soil volume; and at least one controller associated with at least one temperature sensor configured for actuating the system.

In an embodiment, the hollow layer of the system for energy collection and storage and building heating comprises airflow inlet and outlet points, allowing fluid exchange by convection.

In an embodiment, the piping for heat exchange with the soil is buried in a soil volume under said building.

In an embodiment, the piping for heat exchange with the soil is incorporated in the walls of said building.

In an embodiment, the heat exchanger used in the system for energy collection and storage and building heating is an integral part of a heat pump.

In an embodiment, the outer layer of the building where the system for energy collection and storage and building heating is installed, is configured for capturing energy from solar energy.

In an embodiment, the heat-receiving outer layer of the building used in the system for energy collection and storage and building heating is composed of an outer transparent layer, a hollow layer and an inner solar radiation-receiving layer.

In an embodiment, the heat-receiving outer layer of the building of the system for energy collection and storage and building heating is composed of an outer solar radiation-receiving layer, a hollow layer and an insulating layer.

In an embodiment, the system for energy collection and storage and building heating further comprises a transparent layer, a hollow layer and an air-impermeable layer.

Throughout the present description it is considered that an air-impermeable material is commonly referred to as an "air barrier" or "air permeability barrier". This type of material is designed to prevent the passage of air, avoiding unwanted air to enter or exit in a structure. Generally, these materials are used in constructions in order to improve energy efficiency by preventing uncontrolled air leakage and contributing to the thermal regulation of the internal environment. These barriers can be incorporated into different construction elements, such as walls, ceilings and floors.

In an embodiment, the side walls in contact with the soil comprise a drainage layer.

In an embodiment, the system for energy collection and storage and building heating comprises an outer layer of airflow due to convection, which can be configured for exchanging the exhaust gases and/or sewer ventilation.

In an embodiment, the outer layer of airflow of the system for energy collection and storage and building heating is configured for exchanging the exhaust gases and/or sewer ventilation.

In an embodiment, the heat exchanger of the collection, energy storage and building heating system is fed at least partially by exhaust gases and/or sewer ventilation.

In an embodiment, the system for energy collection and storage and building heating comprises a drainage at the bottom of the soil volume.

In an embodiment, the system for energy collection and storage and building heating further comprises at least one drain for draining the ascending moisture.

In an embodiment, the side walls of the system for energy collection and storage and building heating integrate the foundations of a building.

In an embodiment, the side walls of the system for energy collection and storage and building heating extend vertically to form outer walls of a building.

In an embodiment, the system for energy collection and storage and building heating comprises a heat pump.

In an embodiment, the heat exchanger of the system for energy collection and storage and building heating comprises a connection for heating of sanitary hot water.

In an embodiment, the drain of the system for energy collection and storage and building heating is arranged so as to surround said side walls and below said soil volume.

In an embodiment, the system for energy collection and storage and building heating comprises a foundation buried for support of said side walls.

In an embodiment, the system for energy collection and storage and building heating further comprises bottom insulation so as to enclose the soil volume.

In an embodiment, the system for energy collection and storage and building heating comprises an outer layer of airflow due to convection along said building.

In an embodiment, the hollow layer of the system for energy collection and storage and building heating is configured for capturing the heat dissipated from the interior of the building.

In an embodiment, the outer layer of airflow comprises a partial or total airflow cut-off valve. This partial cut-off valve allows the choice of which wall is exposed to the sun and to remove the hot air therefrom. The walls that have the valve closed start having a stagnant air layer that acts as an additional insulation.

In an embodiment, the piping of the system for energy collection and storage and building heating is placed in a form selected from the list consisting of serpentines, snail, ring, spiral, basket, or combinations thereof.

In an embodiment, the system for energy collection and storage and building heating further comprises a fluid propulsion pump for supporting in the convection phenomena and/or ventilation of the hollow layer.

In an embodiment, the system for energy collection and storage and building heating further comprises a ventilating pump.

In an embodiment, the system for energy collection and storage and building heating further comprises an air exhaust control system.

In an embodiment, the outer layer of the system for energy collection and storage and building heating comprises at least one photovoltaic panel.

The present application further describes a building comprising the system for energy collection and storage and building heating previously mentioned.

### BRIEF DESCRIPTION OF THE DRAWINGS

For an easier understanding, figures are herein attached which represent preferred embodiments that do not intend to limit the object of the present description.
**Figure 1****:** Schematic representation of an embodiment of the system for energy collection and storage and building heating.
**Figure 2****:** Schematic representation of an embodiment of the side wall of the system for energy collection and storage and building heating.
**Figure 3****:** Schematic representation of an embodiment of the system for energy collection and storage and building heating.

In the figures previously mentioned, the following elements are indicated with reference numbers:
1 - Heat exchanger for sanitary water heating;
2 - Heat exchanger;
3 - Cut-off valve;
4 - Building air extractor;
5 - Insulation;
6 - Drainage layer;
7 - Drain;
8 - Outer layer;
9 - Protection layer;
10 - Insulation;
11 - Structure;
12 - Rigid plate;
13 - Blocking structure;
14 - Soil volume;
15 - Foundation;
16 - Piping.

### DETAILED DESCRIPTION

The present description refers to a system for energy collection and storage and building heating.

The present application describes a system for energy collection and storage and building heating comprising at least one heat-receiving outer layer of the building that comprises a hollow layer; at least one heat exchanger (2) that receives the air from the outer layer of the building; piping (16) for heat exchange with the soil (14); side walls thermally insulated surrounding said soil volume (14); and at least one controller associated with at least one temperature sensor configured for actuating the system.

In an embodiment, the hollow layer of the system for energy collection and storage and building heating comprises airflow inlet and outlet points, allowing fluid exchange by convection, for better results.

In an embodiment, the piping for heat exchange with the soil is buried in a soil volume under said building, for better efficiency.

In an embodiment, the piping for heat exchange with the soil is incorporated in the walls of said building, for better efficiency.

In an embodiment, the heat exchanger (2) used in the system for energy collection and storage and building heating is an integral part of a heat pump, for better results.

In an embodiment, the outer layer of the building where the system for energy collection and storage and building heating is installed, is configured for capturing energy from solar energy, for better results.

In an embodiment, the heat-receiving outer layer of the building used in the system for energy collection and storage and building heating is composed of an outer transparent layer, a hollow layer and an inner solar radiation-receiving layer, for better results.

In an embodiment, the heat-receiving outer layer of the building of the system for energy collection and storage and building heating is composed of an outer solar radiation-receiving layer, a hollow layer and an insulating layer, for better results.

In an embodiment, the system for energy collection and storage and building heating further comprises a transparent layer, a hollow layer and an air-impermeable layer, for better results.

In an embodiment, the side walls in contact with the soil comprise a drainage layer (6), for better results.

In an embodiment, the system for energy collection and storage and building heating comprises an outer layer of airflow due to convection, which can be configured for exchanging the exhaust gases and/or sewer ventilation, for better results.

In an embodiment, the heat exchanger (2) of the system for energy collection and storage and building heating is fed at least partially by exhaust gases and/or sewer ventilation, for better results.

In an embodiment, the system for energy collection and storage and building heating comprises a drainage at the bottom of the soil volume (14), for better results.

In an embodiment, the system for energy collection and storage and building heating further comprises at least one drain (7) for draining the ascending moisture, for better results.

In an embodiment, the side walls of the system for energy collection and storage and building heating integrate the foundations of a building, in order to improve the efficiency of the whole system and facilitate the constructive process in that it is possible to use the foundations excavation to also integrate the piping (16) into the volume of soil (14) under the building, thus reducing the need for excavations elsewhere in the process.

In an embodiment, the side walls of the system for energy collection and storage and building heating extend vertically to form outer walls of a building, thus allowing a higher efficiency of the system.

In an embodiment, the side walls of the system for energy collection and storage and building heating comprise a drainage layer for greater insulation against moisture.

In an embodiment, the system for energy collection and storage and building heating further comprises one drain for draining the ascending moisture.

In an embodiment, the side walls of the system for energy collection and storage and building heating comprise soil within them, which functions as storage of thermal energy, in order to improve the efficiency and ecology of the system.

In an embodiment, the side walls of the system for energy collection and storage and building heating comprise a hollow layer under the outer layer to allow the convection and circulation of the air.

In an embodiment, the system for energy collection and storage and building heating further comprises a heat pump for greater efficiency.

In an embodiment, the heat exchanger (2) of the system for energy collection and storage and building heating comprises a connection for heating of sanitary hot water, for the better overall building efficiency.

In an embodiment, the drain of the system for energy collection and storage and building heating is arranged so as to surround said side walls and below said soil volume (14), in order to maximize the drainage of the ascending moisture.

In an embodiment, the system for energy collection and storage and building heating comprises a foundation (15) buried for support of said side walls, for better efficiency.

In an embodiment, the system for energy collection and storage and building heating further comprises a bottom plate so as to enclose the soil volume (14), for better overall system efficiency.

In an embodiment, the system for energy collection and storage and building heating comprises an outer layer of airflow due to convection along said building, for greater system convection.

In an embodiment, the hollow layer of the system for energy collection and storage and building heating is configured for capturing the heat dissipated from the interior of the building, for better results.

In an embodiment, the outer layer of airflow of the system for energy collection and storage and building heating comprises a partial or total airflow cut-off valve (3), thus allowing the overall flow control in the system, allowing the air stagnation and creating greater thermal insulation.

In an embodiment, the piping (16) of the system for energy collection and storage and building heating is placed in a form selected from the list consisting of serpentines, snail, ring, spiral, basket, or combinations thereof, for better efficiency results.

In an embodiment, the system for energy collection and storage and building heating further comprises a fluid propulsion pump so as to promote the fluid circulation within the piping.

In an embodiment, the system for energy collection and storage and building heating further comprises a ventilating pump, for better results.

In an embodiment, the system for energy collection and storage and building heating further comprises an air exhaust control system, for better results.

In an embodiment, the outer layer of the system for energy collection and storage and building heating comprises at least one photovoltaic panel, for better results.

The present application further describes a building comprising the system for energy collection and storage and building heating previously mentioned.

In an embodiment, the controller controls the several functions and parts of the system for energy collection and storage and building heating such as, for example, the opening and closing of air cut-off valves, the actuation of the heating/cooling system during the solar incidence hours, being for that purpose associated with at least one temperature sensor.

In order to better evaluate the results obtained by the system for energy collection and storage and building heating some results were measured, which were then compared with the existing data in the prior art.

According to the prior art, the results presented in the argo monobloc AGHP161PH catalogue were chosen as a temperature differential comparison term between the outdoor and internal temperature in °C as indicated in Table 1.

**Table 1 - Efficiency data with respect to outdoor temperature according to the EN14511-3:2013 standard, using the Argo monobloc AGHP161PH prior art system.**

| | Outdoor air temperature (°C) | | | | | | | | | | | | | |
|---|---|---|---|---|---|---|---|---|---|---|---|---|---|---|
| | -25 | -20 | -15 | -10 | -7 | -2 | 2 | 7 | 10 | 15 | 20 | 25 | 30 | 35 |
| Temp. of the heated air (°C) | COP | COP | COP | COP | COP | COP | COP | COP | COP | COP | COP | COP | COP | COP |
| 40 | 2.2 | 2.4 | 2.7 | 2.9 | 3 | 3.2 | 3.4 | 3.8 | 4 | 4.4 | 4.6 | 4.8 | 5.1 | 5.4 |

As shown by Table 1, with a difference of 20°C in the outdoor air temperature (between 15°C and 35°C) there is a difference of 1 point in the COP.

In the case of the prototype of the system for energy collection and storage and building heating, however, the results in Table 2 demonstrate a maximum difference of 48°C, at 12:00, between the outdoor air and the heated air achieved in the prototype. In the example given, measured on 14^{th} January 2022, there were 6 hours with a differential greater than 20°C.

**Table 2 - Temperature difference between the air heated outdoor and in the outer airflow layer of the building using the system for energy collection and storage and building heating; data now presented were obtained in Oporto city, Portugal.**

| Reading Date/Time | Outdoor Temperature (°C) | Temperature in the outer airflow layer (°C) |
|---|---|---|
| 14^{th}-January-2022 00:50:33 a.m. | 7.4 | 4.5 |
| 14^{th}-January-2022 01:51:25 a.m. | 9.9 | 6.3 |
| 14^{th}-January-2022 02:52:21 a.m. | 11.5 | 8.9 |
| 14^{th}-January-2022 03:53:18 a.m. | 11.4 | 9.2 |
| 14^{th}-January-2022 04:54:15 a.m. | 10.9 | 9.1 |
| 14^{th}-January-2022 05:55:12 a.m. | 10.8 | 8.6 |
| 14^{th}-January-2022 06:56:04 a.m. | 11.2 | 9.1 |
| 14^{th}-January-2022 07:57:00 a.m. | 11.4 | 9 |
| 14^{th}-January-2022 08:57:57 a.m. | 12.3 | 20.8 |
| 14^{th}-January-2022 09:58:54 a.m. | 14.3 | 48.1 |
| 14^{th}-January-2022 10:59:51 a.m. | 15.6 | 60.1 |
| 14^{th}-January-2022 12:00:43 p.m. | 16.7 | 65.5 |
| 14^{th}-January-2022 01:01:39 p.m. | 17.5 | 62.5 |
| 14^{th}-January-2022 02:02:36 p.m. | 18.1 | 57.8 |
| 14^{th}-January-2022 03:03:33 p.m. | 18.9 | 51.4 |
| 14^{th}-January-2022 04:04:30 p.m. | 18.6 | 36.1 |
| 14^{th}-January-2022 05:05:22 p.m. | 18 | 21.8 |
| 14^{th}-January-2022 06:06:19 p.m. | 17.1 | 17.2 |
| 14^{th}-January-2022 07:07:16 p.m. | 16.3 | 14.7 |
| 14^{th}-January-2022 08:08:13 p.m. | 16.5 | 14.1 |
| 14^{th}-January-2022 09:09:09 p.m. | 16.7 | 14.8 |
| 14^{th}-January-2022 10:10:01 p.m. | 16.6 | 15.1 |
| 14^{th}-January-2022 11:10:58 p.m. | 16.6 | 15.1 |

The system for energy collection and storage and building heating uses the soil volume (14) under the building for thermal storage, through permutation with buried piping (16). This thermal storage is insulated at least on the side walls and drained with at least one drain (7) in order to avoid ascending moisture. By having a large mass of thermal storage, it is possible to use the system for energy collection and storage and building heating during the hours of greater yield (solar radiation), storing with great efficiency and then irradiating during the rest of the day, including the coldest hours.

These high temperatures can also be used to heat sanitary hot water.

In an embodiment, the system for energy collection and storage and building heating comprises a partial or total airflow cut-off valve (3), for example when one side of the building is not getting solar radiation or when there is no need to operate the heating system. When the valve is closed, because there is no air movement, the hollow layer acts as an extra insulation layer. When selecting only the side exposed to the sun, the air admitted into the heat exchanger (2) has a higher temperature, as can be seen in Table 2 regarding the difference between the temperature of the roof or the chimney.

The use of soil as accumulation in the soil volume (14) or even in the side walls allows for a completely prefabricated construction, including in the foundations, which represents the possibility of dismantling the building without creating rubble. It also facilitates the system's modularity, by allowing additions to be made more easily. Walls can also be filled with soil, increasing the thermal mass.

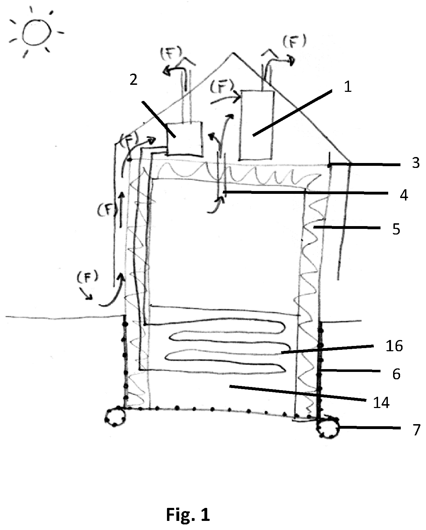

Figure 1 illustrates a schematic representation of an embodiment of the system for energy collection and storage and building heating, where the existence of a heat exchanger for heating sanitary water (1) and a heat exchanger for heating the building (2), which feeds a piping (16) buried in the soil volume (14) under the building, can be seen. The soil volume (14) is enclosed by buried side walls, which are thermally insulated. This inclusion of side walls allows for much greater insulation of the soil volume (14), allowing for greater efficiency in energy capture, supported by the reduction of phenomena such as ascending moisture.

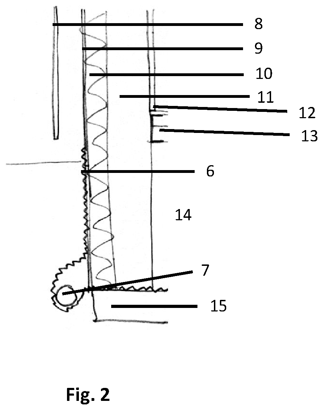

In figure 2 there is a schematic representation of an embodiment of the side wall of the system for energy collection and storage and building heating, which may comprise an outer layer (8), a protection layer (9), an insulation layer (10), a hollow structure (11) through which air can pass and which can be filled with soil, an outer rigid plate (12) and a blocking structure (13) to protect the piping (16). This side wall can be supported on the foundation (15) of the building.

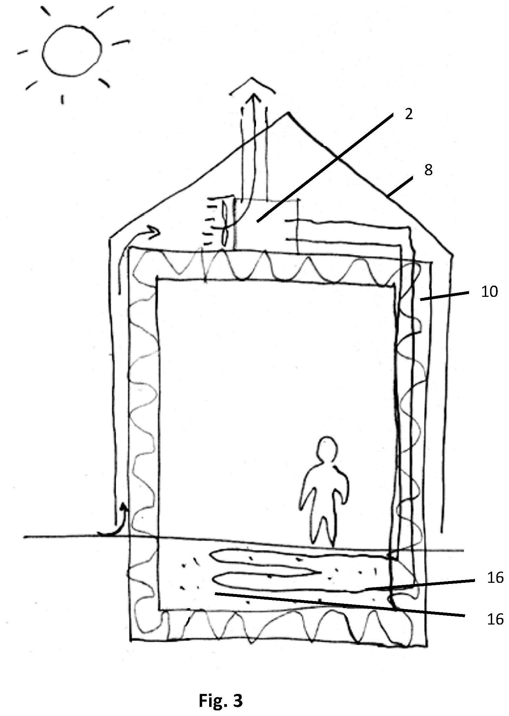

In figure 3 there is a schematic representation of an embodiment of the system for energy collection and storage and building heating, wherein the system further comprises a bottom plate so as to enclose the soil volume (14).

The term "comprises" or "comprising" whenever used herein is intended to indicate the presence of stated characteristics, elements, integers, steps and components, but not to preclude the presence or addition of one or more other characteristics, elements, integers, steps and components, or groups thereof.

The present invention is, of course, in no way restricted to the embodiments described in this document and a person with average knowledge in the art will be able to foresee many possibilities of modification thereof and replacement of technical characteristics with equivalent ones, depending on the requirements of each situation, such as defined in the appended claims.

The following claims define additional embodiments of the present description.

## Claims

1. System for energy collection and storage and building heating comprising:
at least one heat-receiving outer layer of the building that comprises a hollow layer;
at least one heat exchanger that receives the air from the outer layer of the building;
piping for heat exchange with the soil;
thermally insulated side walls surrounding said soil volume; and
at least one controller associated with at least one temperature sensor configured for actuating the system.

2. System for energy collection and storage and building heating according to the previous claim, wherein the hollow layer comprises airflow inlet and outlet points, allowing fluid exchange by convection.

3. System for energy collection and storage and building heating according to any one of the previous claims, wherein the piping for heat exchange with the soil is buried in a soil volume under said building.

4. System for energy collection and storage and building heating according to any one of the previous claims, wherein the piping for heat exchange with the soil is incorporated in the walls of said building.

5. System for energy collection and storage and building heating according to any one of the previous claims, wherein the heat exchanger is an integral part of a heat pump.

6. System for energy collection and storage and building heating according to any one of the previous claims, wherein the outer layer of the building is configured for capturing energy from solar radiation.

7. System for energy collection and storage and building heating according to any one of the previous claims, wherein the heat-receiving outer layer of the building is composed of an outer transparent layer, a hollow layer and an inner solar radiation-receiving layer.

8. System for energy collection and storage and building heating according to any one of the previous claims, wherein the heat-receiving outer layer of the building is composed of an outer solar radiation-receiving layer, a hollow layer and an insulating layer.

9. System for energy collection and storage and building heating according to any one of the previous claims, further comprising a transparent layer, a hollow layer and an air-impermeable layer.

10. System for energy collection and storage and building heating according to any one of the previous claims, wherein the heat exchanger comprises a connection for heating of sanitary hot water.

11. System for energy collection and storage and building heating according to any one of the previous claims, wherein the heat exchanger is fed at least partially by exhaust gases and/or sewer ventilation.

12. System for energy collection and storage and building heating according to any one of the previous claims, wherein the side walls comprise a drainage layer.

13. System for energy collection and storage and building heating according to any one of the previous claims, wherein the side walls integrate the foundations of a building.

14. System for energy collection and storage and building heating according to any one of the previous claims, wherein the side walls extend vertically to form outer walls of a building.

15. System for energy collection and storage and building heating according to any one of the previous claims, comprising at least one drain arranged so as to surround said side walls and below said soil volume.

16. System for energy collection and storage and building heating according to any one of the previous claims, further comprising a bottom insulation so as to enclose the soil volume.

17. System for energy collection and storage and building heating according to any one of the previous claims, wherein the outer layer of airflow comprises a partial or total airflow cut-off valve.

18. System for energy collection and storage and building heating according to any one of the previous claims, wherein the piping is placed in a form selected from the list consisting of serpentines, snail, ring, spiral, basket, or combinations thereof.

19. System for energy collection and storage and building heating according to any one of the previous claims, further comprising a fluid propulsion pump.

20. System for energy collection and storage and building heating according to any one of the previous claims, further comprising a ventilating pump.

21. System for energy collection and storage and building heating according to any one of the previous claims, further comprising an air exhaust control system.

22. System for energy collection and storage and building heating according to any one of the previous claims, wherein the outer layer comprises at least one photovoltaic panel.

23. Building comprising the system for energy collection and storage and building heating described in any one of the previous claims.
